# EUROPÄISCHE PATENTSCHRIFT

(11) **EP 1 660 794 B1**
(45) Veröffentlichungstag und Bekanntmachung des Hinweises auf die Patenterteilung: **11.07.2012**
(21) Anmeldenummer: 04786702.3
(22) Anmeldetag: 01.09.2004
(51) Int. Cl.: F16J 9/20

(54) **ÖLABSTREIFRING-RINGNUT-ANORDNUNG FÜR KOLBEN VON VERBRENNUNGSMOTOREN**
OIL SCRAPER RING RING GROOVE ARRANGEMENT FOR PISTONS OF INTERNAL COMBUSTION ENGINES
ENSEMBLE SEGMENT RACLEUR D'HUILE-GORGE DE SEGMENT POUR PISTONS DE MOTEURS A COMBUSTION INTERNE

(30) Priorität: 02.09.2003 DE 10340313
(43) Veröffentlichungstag der Anmeldung: 31.05.2006
(73) Patentinhaber: MAHLE GMBH, 70376 Stuttgart (DE)
(72) Erfinder: FIEDLER, Rolf-Gerhard, 73240 Wendlingen (DE)
(74) Vertreter: Pohle, Reinhard
(86) Internationale Anmeldenummer: PCT/DE2004/001940
(87) Internationale Veröffentlichungsnummer: WO 2005/022011

(56) Entgegenhaltungen:
- DE-A- 4 429 649
- DE-C- 3 305 385
- DE-C- 4 300 531

## Beschreibung

Die Erfindung betrifft eine Ölabstreifring-Ringnut-Anordnung für Kolben von Verbrennungsmotoren mit einer mit parallelen Flanken versehenen Lamelle, deren Lauffläche eine ballig asymmetrische Form mit einer über den Umfang der Lamelle erstreckenden Scheitelpunktlinie aufweist, wobei die Lamelle in einer Ringnut des Kolbens mit einer kolbenbodenseitig abgewandten und kolbenbodenseitig zugewanden Ringnutflanke angeordnet ist.

Um zu verhindern, dass zuviel Motoröl in den Brennraum gelangt, was neben einem hohen Ölverbrauch auch negative Auswirkungen auf das Emissionsverhalten des Motors zur Folge hat, ist eine ausreichende Tangentialkraft der Ölabstreifringe zur Erzeugung einer radialen Anpressung an die Zylinderwand und damit einer guten Ölabstreifwirkung notwendig. Das bewirkt jedoch eine hohe Flächenpressung an den Laufflächen der Stahl-Lamellen und damit auch eine hohe Reibleistung im Motorbetrieb. Diese Reibleistung verschlechtert den Wirkungsgrad des Verbrennungsmotors und erhöht demzufolge den Kraftstoffverbrauch. Die Auslegung der Tangentialkraft der Ölabstreifringe ist deshalb immer ein Kompromiss zwischen minimaler Reibleistung und maximaler Ölabstreifwirkung. Sämtliche Maßnahmen zur Verminderung der Reibleistung im motorischen Betrieb ohne Reduzierung der Tangentialkraft erleichtern somit die Auslegung der Ölabstreifringe bzw. verbessern den Wirkungsgrad des Motors.

Dementsprechend wurde für gattungsgemäße Ölabstreifringe versucht, die Laufflächen der Lamellen derart zu formen, dass diese den vorgenannten Forderungen gerecht werden.

Asymmetrische Laufflächen von Ölabstreifringen bzw. Kolbenringen sind aus der DE 38 33 322 A1, DE 43 00 531 C1 oder DE 44 29 649 C2 bekannt. Ebenso ist aus der DE 33 05 385 C1 ein Kolbenring bekannt, der in einer Ringnut eines Kolbens angeordnet ist, dessen Ringnut-Seitenwände vorzugsweise parallel, aber schräg zur Kolbenachse verlaufen, um eine verbesserte Abdichtung zu gewährleisten. Schräg verlaufende parallel zueinander ausgerichtete Ringnut-Seitenwände sind auch aus dem japanischen Gebrauchsmuster 57-73340 bekannt. Diese vorgenannte Ausführungsformen sind jedoch auf Kompressionsringe bezogen, deren Anforderung hinsichtlich der Flächenpressung sehr niedrig ist, hingegen Ölabstreifringe hohe Flächenpressungen erfordern.

Es ist Aufgabe der Erfindung, eine Ölabstreifring-Ringnut-Anordnung für einen Kolben eines Verbrennungsmotors anzugeben, mit der gegenüber dem bekannten Stand der Technik eine verbesserte Ölabstreifwirkung bei reduzierter Reibung und einem reduzierten Verschleiß der Lauffläche des Ölabstreifringes erreicht wird.

Gelöst wird die Aufgabe durch eine Ölabstreifring-Ringnut-Anordnung, bei der mindestens eine der Ringnutflanken unter einem Winkel zur Kolbenachse nach radial außen bis zum Kolbenaußendurchmesser geneigt verläuft, wobei bevorzugt die kolbenbodenseitig abgewandte Ringnutflanke vom Kolbenboden weg geneigt angeordnet ist. Die Lauffläche der Lamelle ist derart ausgebildet, dass sie einer verschleißnahen Endkontur im eingelaufenen Motorzustand entspricht, wobei im montierten Zustand des Ölrings im Kolben die Scheitelpunktlinie der Lauffläche zur kolbenbodenseitig abgewandten Ringnutflanke hin angeordnet ist.

Die Lauffläche der Lamelle zeichnet sich durch eine asymmetrische Neigung mit einer gegenüber dem Stand der Technik stark reduzierten Balligkeit aus, wobei die Laufflächenkontur näherungsweise durch ein Polynom 2. Ordnung beschrieben werden kann.

In einer weiteren Ausgestaltung der Erfindung sind beide Ringnutflanken unter einem Winkel zur Kolbenachse nach radial außen bis zum Kolbenaußendurchmesser derart geneigt angeordnet, dass die kolbenbodenseitig abgewandte Ringnutflanke vom Kolbenboden weg geneigt und die kolbenbodenseitig zugewandte Ringnutflanke zum Kolbenboden hin geneigt verläuft.

Durch die erfindungsgemäße Laufflächengestaltung und der Anordnung der Lamelle in der erfindungsgemäß gestalteten Ringnut wird in Abhängigkeit von der Hubbewegung des Kolbens durch günstigere hydrodynamische Bedingungen eine Verminderung der Reibleistung des Ölabstreifrings ohne eine Reduzierung der Tangentialkraft erreicht, wobei die ölabstreifende Funktion mit dem Wechsel der Hubbewegung des Kolbens in vollem Umfang erhalten bleibt. Die Reduzierung der Reibleistung bewirkt eine Verbesserung des Wirkungsgrades des Motors oder es kann durch eine Erhöhung der Tangentialkraft bei unverändertem Reibleistungsniveau das Ölabstreifverhalten verbessert werden.

Gegenüber den herkömmlichen Ölabstreifringanordnungen kann somit die Spreizfeder entfallen, sodass der Fertigungsaufwand und die Herstellungskosten gesenkt werden können. Außerdem ist eine Verringerung der axialen Höhe des gesamten Ringpaketes im Vergleich zu Ringpaketen nach dem Stand der Technik realisierbar.

Zweckmäßige Ausgestaltungen der Erfindung sind Gegenstand der Unteransprüche.

Ein Ausführungsbeispiel der Erfindung wird im Folgenden anhand der Zeichnungen beschrieben. Es zeigen
- Fig. 1: einen Querschnitt der erfindungsgemäßen Ölabstreifring-Ringnut-Anordnung in einer vom Verbrennungsraum weggerichteten Hubbewegung des Kolbens;
- Fig. 2: einen Querschnitt der erfindungsgemäßen Ölabstreifring-Ringnut-Anordnung in einer gemäß Fig.1 entgegengesetzten Hubbewegung des Kolbens;
- Fig. 3: einen Querschnitt einer Ölabstreif-Ringnut-Anordnung mit zwei Ölabstreifringen;
- Fig.4: eine perspektivische Ansicht des erfindungsgemäßen Ölabstreifringes;
- Fig. 5: einen Querschnitt einer zweiten Ausführung einer Ölabstreifring-Ringnut-Anordnung
- Fig. 6: einen Querschnitt einer dritten Ausführung einer Ölabstreifring-Ringnut-Anordnung

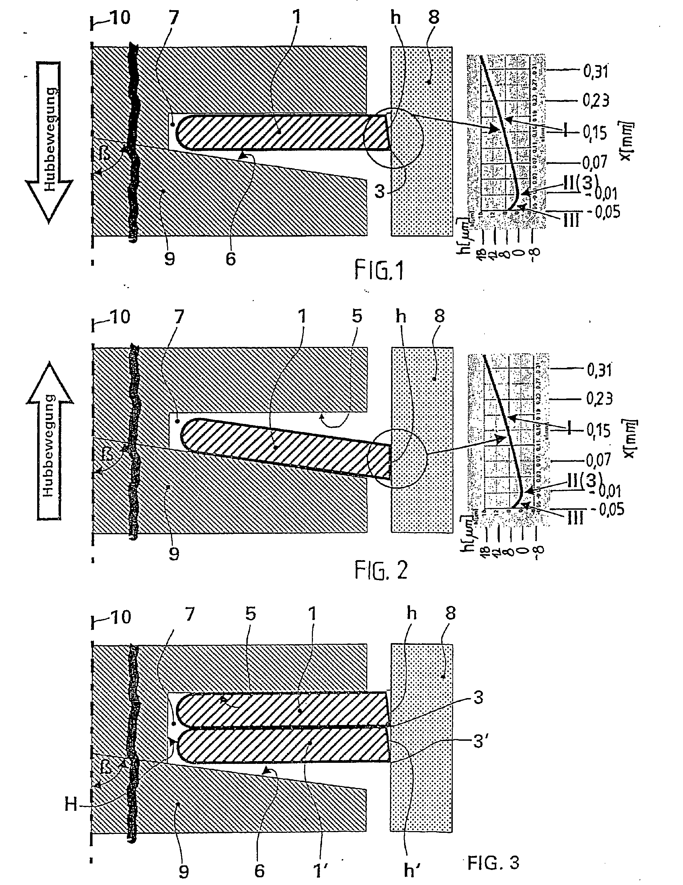

Wie aus den Figuren 1 und 2 ersichtlich, besteht eine Ölabstreifring-Ringnut-Anordnung aus einer Lamelle 1 mit parallelen Flanken und einer Lauffläche h. Die Lamelle 1 ist in einer Ringnut 7 eines Kolbens 9 angeordnet und ist mit seiner Lauffläche h zur Zylinderwand 8 des Motors ausgerichtet. Eine Ringnutflanke 5 stellt die kolbenbodenseitige und eine Ringnutflanke 6 die zum Kolbenboden abgewandte Seite der Ringnut 7 dar. Erfindungsgemäß ist die kolbenbodenseitige Ringnutflanke 5 in einem Winkel von 90° zur Kolbenachse 10 ausgerichtet angeordnet, wobei die dem Kolbenboden abgewandte Ringnutflanke 6 unter einem Winkel β von 85° bis 87° bis zum Kolbenaußenumfang verläuft.

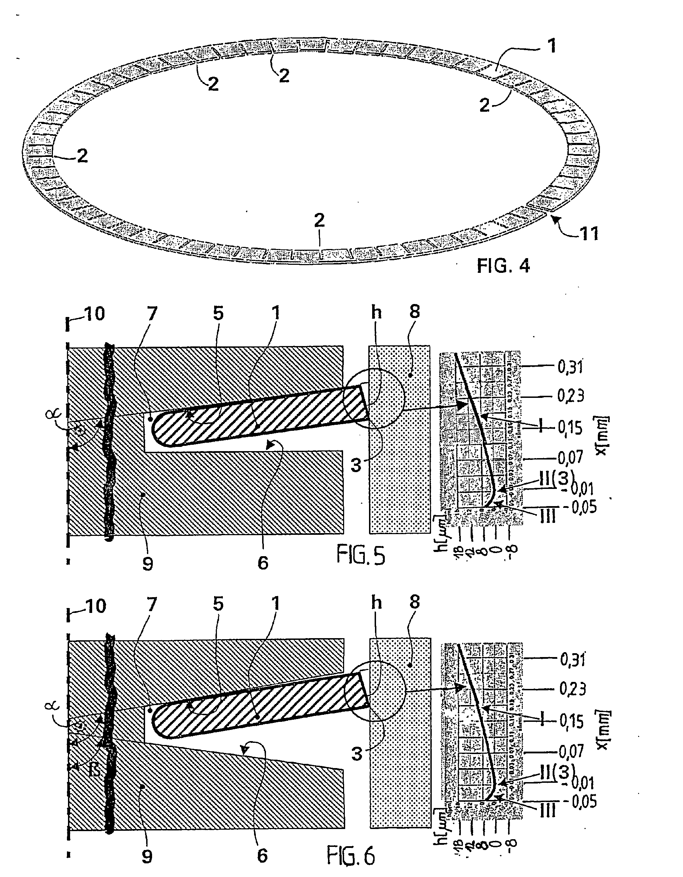

Gemäß der Ölabstreifring-Ringnut-Anordnung weist die Lamelle 1 eine ballig asymmetrisch geformte Lauffläche h mit einer über den Umfang der Lamelle erstreckenden Scheitelpunktlinie 3 auf, wobei die Scheitellinie 3 als in Kontakt zur Zylinderwand 8 stehende Kante zum Ölabstreifen wirkt. Nach Fig. 1 ist die Lamelle 1 in ihrem montierten Zustand im Kolben derart angeordnet, dass ihre Scheitelpunktlinie 3 (Kante) zur kolbenbodenseitig abgewandten Ringnutflanke 6 ausgerichtet ist. Wie in Fig. 4 dargestellt, kann zur Erhöhung der radialen Vorspannung der Ringstoß 11 geschlossen sein, wobei der Ölabstreifring entsprechend radial ausgeführte Schlitze 2 aufweist.

Erfindungsgemäß hat die Lauffläche h der Lamelle eine Form, die einem Einlaufvorgang von mehreren hundert Stunden im Motorbetrieb entspricht. Diese ist dadurch charakterisiert, dass die Lauffläche h der Lamelle 1 im Querschnitt in einem ersten Abschnitt (I) der asymmetrischen Form einem Polynom 2. Ordnung mit h(x)= ax + bx² folgt, wobei x= Laufflächenkoordinate im kartesischen Koordinatensystem in mm ist und a, b Koeffizienten, mit a definiert durch das Verhältnis des axialen Flankenspiels der Lamelle zur Breite der Lamelle; b definiert als Betrag der Laufflächenkrümmung; einem als Kante ausgeführten tragenden Scheitel (II) h(x=0), und in einem dritten Abschnitt (III) der asymmetrischen Form der Funktion h(x)= cx², mit c als einem Vielfachen von b, folgt. Als Beispiel für eine Lamelle mit einer Dicke von 0,4 mm ergibt sich ein Wert h(x)= 35x + 50x². Damit sind die entsprechend Fig. 1 und 2 dargestellten Querschnittskurven mit x als Laufflächenkoordinate in mm und h(x) als Balligkeit in µm erzielbar. Es ist verständlich, dass die Koeffizienten dieses Polynoms auf die spezifische Anwendung abzustimmen sind, wobei wesentliche Parameter hierbei der Zylinderdurchmesser, die Abmessungen des Lamellenquerschnittes und die axialen Spielverhältnisse des eingebauten Ölabstreifringes in der Ringnut sind. Die typische Balligkeit der Lauffläche h nach der Erfindung beträgt ca. 2 bis 10 µm/0,4 mm gegenüber den Ausführungen nach dem Stand der Technik von 3 bis 15 µm/0,15 mm.

Nach einem weiteren Ausführungsbeispiel gemäß Fi. 3 ist neben einer ersten Lamelle 1 eine zweite Lamelle 1'- beide lose mit ihren Flanken aufeinandergestapelt - in der Ringnut 7 mit einer entsprechend der Lamellenhöhen angepassten Ringnutgrundhöhe H angeordnet, sodass ein Winkel β von bevorzugt 85°bis 87° Winkelgrad zwischen der Kolbenachse und der kolbenbodenseitig abgewandten Ringnutflanke 6 entsteht. In diesem Ausführungsbeispiel sind beide Scheitelpunktlinien 3,3' (Kanten) von der kolbenbodenseitigen Ringnutflanke 5 weg weisend angeordnet.

Nach einem weiteren Ausführungsbeispiel gemäß Fig. 5 ist die kolbenbodenseitige Ringnutflanke 5 der Ringnut 7 zum Kolbenboden unter dem Winkel α hin geneigt ausgeführt oder wie in Fig. 6 dargestellt, beide Ringnutflanken 5 und 6 sind unter den Winkeln α und β zur Kolbenachse 10 nach radial außen bis zum Kolbenaußendurchmesser derart geneigt angeordnet, dass die kolbenbodenseitig abgewandte Ringnutflanke 6 vom Kolbenboden weg geneigt und die kolbenbodenseitig zugewandte Ringnutflanke 5 zum Kolbenboden hin geneigt verläuft. Der Winkel α beträgt hierbei bevorzugt 93° bis 98° Grad, wobei der Winkel β, wie im ersten Ausführungsbeispiel ausgeführt, bevorzugt 85° bis 87° Grad beträgt.

Funktionell ist die erfindungsgemäß verbesserte Ölabstreifwirkung dadurch gegeben, dass die an der Lauffläche h der Lamelle in Zylinderachsrichtung angreifende Reibkraft ein Drehmoment erzeugt, welches die Lamelle tellerförmig verwölbt. Dies ist möglich, weil die Gestaltung der V-förmigen Ringnut 7 eine Bewegung der Lamelle in axialer Richtung vor allem an der inneren Auflage behindert, wohingegen an der äußeren Auflage deutlich größere axiale Bewegungsamplituden möglich sind. Die Reibkraft und damit das Drehmoment wechselt abhängig von der Hubrichtung des Kolbens das Vorzeichen. Da die Höhe der Reibkraft noch geschwindigkeitsabhängig ist, hat dies ständige Änderungen der tellerförmigen Verwölbung zur Folge, bezeichnet als dynamisches Twisten. Durch das dynamische Twisten erzeugt die Lamelle, die bei der Hubbewegung weg vom Verbrennungsraum - dem Abwärtshub - an der kolbenbodenseitig zugewandten Nutflanke anliegt, in Kombination mit der asymmetrischen Neigung der Lauffläche eine gute Ölabstreifwirkung -"Kante" trägt -, wie in Fig. 1 dargestellt, während die jeweils andere Lage der Lamelle aufgrund der definierten Balligkeit der Lauffläche eine verbesserte Hydrodynamik beim Aufwärtshub aufweist - "Fläche" trägt (Abschnitt I) - wie in Fig. 2 dargestellt. Dadurch reduziert sich die Reibleistung an der Lamelle, welche in vertwistetem Zustand eine schlechtere Ölabstreifwirkung aufweist. Eine Änderung der Hubrichtung bewirkt ein Umklappen der Lamelle in die jeweils andere Lage.

Die lagerichtige Orientierung der Lamelle beim Einbau des Ölabstreifringes in den Zylinder des Motors muss beachtet werden, die beispielsweise durch eine Farbmarkierung einer der Lamellenflanken, gewährleistet werden kann.

Die Herstellung der Laufflächenform- bzw. Kontur kann beispielsweise durch Läppen erfolgen.

### Bezugszeichen

- 1,1': Lamelle, Ölabstreifring
- 2: Schlitze
- 3,3': Scheitelpunktlinie (Kante)
- 5: kolbenbodenseitig zugewandte Ringnutflanke
- 6: kolbenbodenseitig zugewandte Ringnutflanke
- 7: Ringnut
- 8: Zylinderwand
- 9: Kolben
- 10: Kolbenachse
- 11: Stoß, Maulweite
- h, h': Laufflächen
- H: Nutgrundhöhe der Ringnut

## Patentansprüche

1. Ölabstreifring-Ringnut-Anordnung für Kolben von Verbrennungsmotoren mit einer mit parallelen Flanken versehenen Lamelle (1), deren Lauffläche (h) eine ballig asymmetrische Form mit einer über den Umfang der Lamelle erstreckenden Scheitelpunktlinie (3) aufweist, wobei die Lamelle in einer Ringnut (7) des Kolbens mit einer kolbenbodenseitig abgewandten (6) und kolbenbodenseitig zugewandten Ringnutflanke (5) angeordnet ist,
**dadurch gekennzeichnet,**
**dass** eine der Ringnutflanken (5, 6) unter einem Winkel oder β zur Kolbenachse (10) nach radial außen bis zum Kolbenaußendurchmesser geneigt verläuft,
**dass** die Lauffläche (h) der Lamelle (1) derart ausgebildet ist, dass sie einer verschleißnahen Endkontur im eingelaufenen Motorzustand entspricht, und
**dass** im montierten Zustand des Ölabstreifringes (1) im Kolben die Scheitelpunktlinie (3) der Lauffläche (h) zur kolbenbodenseitig abgewandten Ringnutflanke (6) hin angeordnet ist.

2. Ölabstreifring-Ringnut-Anordnung nach Anspruch 1, **dadurch gekennzeichnet, dass** die Lauffläche (h) der Lamelle (1) im Querschnitt
- in einem ersten Abschnitt (I) der asymmetrischen Form einem Polynom 2. Ordnung mit h(x)= ax + bx² folgt, wobei
x= Laufflächenkoordinate im kartesischen Koordinatensystem in mm ist und a, b Koeffizienten, mit a definiert durch das Verhältnis des axialen Flankenspiels der Lamellen zur Breite der Lamellen; b definiert als Betrag der Laufflächenkrümmung;
- einem als Kante ausgeführten tragenden Scheitel (II) h(x=0), und
- in einem dritten Abschnitt (III) der asymmetrischen Form der Funktion h(x)= cx², mit c als einem Vielfachen von b, folgt.

3. Ölabstreifring-Ringnut-Anordnung nach Anspruch 1 und 2, **dadurch gekennzeichnet, dass** die kolbenbodenseitig abgewandte Ringnutflanke (6) unter einem Winkel (β) vom Kolbenboden weg geneigt verläuft.

4. Ölabstreifring-Ringnut-Anordnung nach Anspruch 1 und 2, **dadurch gekennzeichnet, dass** die kolbenbodenseitig zugewandte Ringnutflanke (5) unter einem Winkel (α) zum Kolbenboden hin geneigt verläuft.

5. Ölabstreifring-Ringnut-Anordnung nach Anspruch 1 und 2, **dadurch gekennzeichnet, dass** in der Ringnut (7) mit einer Nutgrundhöhe (H) zwei Lamellen (1, 1') lose aufeinanderliegend angeordnet sind, wobei die Nutgrundhöhe derart ausgeführt ist, dass der Winkel (β) einen Wert gemäß Anordnung nach Anspruch1 annimmt.

6. Ölabstreifring-Ringnut-Anordnung nach Anspruch 5, **dadurch gekennzeichnet, dass** beide Scheitelpunktlinien (3, 3') zur kolbenbodenseitig abgewandten Ringnutflanke (6) hin weisend angeordnet sind.

7. Ölabstreifring-Ringnut-Anordnung nach Anspruch 3, **dadurch gekennzeichnet, dass** der Winkel α einen Wert von 93 bis 98 Winkelgrad und der Winkel β einen Wert von 85 bis 87 Winkelgrad umfasst.

8. Ölabstreifring-Ringnut-Anordnung für Kolben von Verbrennungsmotoren mit einer mit parallelen Flanken versehenen Lamelle (1), deren Lauffläche (h) jeweils eine ballig asymmetrische Form mit einer über den Umfang der Lamelle erstreckenden Scheitelpunktlinie (3) aufweist, wobei die Lamelle (1) in einer Ringnut (7) des Kolbens mit einer kolbenbodenseitig abgewandten (6) und kolbenbodenseitig zugewandten Ringnutflanke (5) angeordnet ist,
**dadurch gekennzeichnet,**
**dass** die Ringnutflanken (5, 6) unter jeweils einem Winkel α und β zur Kolbenachse (10) nach radial außen bis zum Kolbenaußendurchmesser derart geneigt angeordnet sind, dass die kolbenbodenseitig abgewandte Ringnutflanke (6) vom Kolbenboden weg geneigt und die kolbenbodenseitig zugewandte Ringnutflanke (5) zum Kolbenboden hin geneigt verläuft;
**dass** die Lauffläche (h) der Lamelle (1) einer verschleißnahen Endkontur im eingelaufenen Motorzustand entspricht; und
**dass** im montierten Zustand des Ölrings (1) im Kolben die Scheitelpunktlinie (3) der Lauffläche (h) zur kolbenbodenseitig abgewandten Ringnutflanke (6) hin angeordnet ist.

9. Ölabstreifring-Ringnut-Anordnung nach Anspruch 7, **dadurch gekennzeichnet, dass** die Lauffläche (h) der Lamelle (1) im Querschnitt
- in einem ersten Abschnitt (I) der asymmetrischen Form einem Polynom 2. Ordnung mit h(x)= ax + bx² folgt, wobei
x= Laufflächenkoordinate im kartesischen Koordinatensystem in mm ist und a, b Koeffizienten, mit a definiert durch das Verhältnis des axialen Flankenspiels der Lamellen zur Breite der Lamellen; b definiert als Betrag der Laufflächenkrümmung;
- einem als Kante ausgeführten tragenden Scheitel (II) h(x=0), und
- in einem dritten Abschnitt (III) der asymmetrischen Form der Funktion h(x)= cx², mit c als einem Vielfachen von b, folgt.

## Claims

1. An oil scraper ring ring groove arrangement for pistons of internal combustion engines, having a lamella (1) which is provided with parallel flanks and the bearing surface (h) of which has a crowned asymmetrical shape with a vertex line (3) that extends over the circumference of the lamella, wherein the lamella is arranged in a ring groove (7) of the piston with one ring groove flank (6) facing away from the piston crown and one ring groove flank (5) facing toward the piston crown,
**characterized In**
**that** one of the ring groove flanks (5, 6) runs at a slant radially outward up to the outer piston diameter at an angle α or β relative to the piston axis (10),
**that** the bearing surface (h) of the lamella (1) is configured such that it corresponds to an almost worn end contour in the run-in engine state, and
**that** in the assembled state of the oil scraper ring (1) in the piston, the vertex line (3) of the bearing surface (h) is arranged toward the ring groove flank (6) that faces away from the piston crown.

2. The oil scraper ring ring groove arrangement according to claim 1, **characterized in that** the bearing surface (h) of the lamella (1), in cross-section
- follows in a first segment (I) the asymmetrical shape of a polynomial of the second order with h(x)=ax+bx², wherein
x=bearing surface coordinate in the Cartesian coordinate system in mm, and a, b are coefficients with a being defined by the ratio of the axial flank play of the lamellae relative to the width of the lamellae; b being defined as the amount of the bearing surface curvature;
- follows a supporting vertex (II) h(x=0) configured as an edge, and
- in a third segment (III), follows the asymmetrical shape of the function h(x)=cx², with c as a multiple of b.

3. The oil scraper ring ring groove arrangement according to claim 1 and claim 2, **characterized in that** the ring groove flank (6) facing away from the piston crown side runs at a slant away from the piston crown at an angle (β).

4. The oil scraper ring ring groove arrangement according to claim 1 and claim 2, **characterized in that** the ring groove flank (5) facing toward the piston crown side runs at a slant toward the piston crown at an angle (α).

5. The oil scraper ring ring groove arrangement according to claim 1 and claim 2, **characterized in that** two lamellae (1, 1') are arranged lying loosely on top of one another in the ring groove (7) with a ring groove height (H), wherein the groove base height is configured such that the angle (β) assumes a value according to the arrangement according to claim 1.

6. The oil scraper ring ring groove according to claim 5, **characterized in that** the two vertex lines (3, 3') are arranged facing toward the ring groove flank (6) facing away from the piston crown side.

7. The oil scraper ring ring groove according to claim 3, **characterized in that** the angle α comprises a value of 93 to 98 angular degrees and the angle β comprises a value of 85 to 87 angular degrees.

8. The oil scraper ring ring groove for pistons of internal combustion engines, having a lamella (1) which is provided with parallel flanks and the bearing surface (h) of which has in each case a crowned asymmetrical shape with a vertex line (3) that extends over the circumference of the lamella, wherein the lamella (1) is arranged in a ring groove (7) of the piston with one ring groove flank (6) facing away from the piston crown and one ring groove flank (5) facing toward the piston crown,
**characterized in**
**that** the ring groove flanks (5, 6) are arranged at a slant radially outward up to the outer piston diameter in each case at an angle α and β relative to the piston axis (10) in such a manner that the ring groove flank (6) that faces away from the piston crown side runs at a slant away from the piston crown, and the ring groove flank (5) that faces toward the piston crown side runs at a slant toward the piston crown;
**that** the bearing surface (h) of the lamella (1) corresponds to an almost worn end contour in the run-in engine state, and
**that** in the assembled state of the oil scraper ring (1) in the piston, the vertex line (3) of the bearing surface (h) is arranged toward the ring groove flank (6) that faces away from the piston crown.

9. The oil scraper ring ring groove arrangement according to claim 7, **characterized in that** the bearing surface (h) of the lamella (1), in cross-section
- follows in a first segment (I) the asymmetrical shape of a polynomial of the second order with h(x)=ax+bx², wherein
x=bearing surface coordinate in the Cartesian coordinate system in mm, and a, b are coefficients with a being defined by the ratio of the axial flank play of the lamellae relative to the width of the lamellae; b being defined as the amount of the bearing surface curvature;
- follows a supporting vertex (II) h(x=0) configured as an edge, and
- in a third segment (III), follows the asymmetrical shape of the function h(x)=cx², with c as a multiple of b.

## Revendications

1. Agencement de segment racleur d'huile et de gorge de segment, pour les pistons de moteurs à combustion interne, avec un segment (1) doté de flancs parallèles, dont la surface d'appui (h) possède une forme asymétrique convexe avec une ligne des sommets (3) qui s'étend sur la périphérie du segment, le segment étant disposé dans une gorge de segment (7) du piston comprenant un flanc de gorge de segment (6) opposé à la tête du piston et un flanc de gorge de segment (5) tourné du côté de la tête du piston,
**caractérisé en ce que**
l'un des flancs de gorge de segment (5, 6), en formant un angle α ou β par rapport à l'axe du piston (10), est incliné dans la direction radiale vers l'extérieur jusqu'au diamètre extérieur du piston ;
la surface d'appui (h) du segment (1) est configurée de manière à correspondre à un contour final proche de l'usure dans l'état du moteur rôdé ; et
dans l'état du segment racleur d'huile (1) monté dans le piston, la ligne des sommets (3) de la surface d'appui (h) est disposée vers le flanc de gorge de segment (6) opposé à la tête du piston.

2. Agencement de segment racleur d'huile et de gorge de segment selon la revendication 1, **caractérisé en ce que** la surface d'appui (h) du segment (1), vue en coupe transversale :
- suit un polynôme du 2^{e} ordre dans une première partie (I) de la forme asymétrique, avec h(x) = ax + bx², où
x = coordonnées de la surface d'appui dans un système de coordonnées cartésiennes en mm ;
a, b sont des coefficients, a définissant le rapport entre le jeu axial du flanc des segments et la largeur des segments et b définissant la valeur de la courbure de la surface d'appui ;
- forme un sommet (II) porteur prenant la forme d'une arête, avec h(x=0) ; et
- suit dans une troisième partie (III) de la forme asymétrique la fonction h(x) = cx², où c est un multiple de b.

3. Agencement de segment racleur d'huile et de gorge de segment selon l'une des revendications 1 et 2, **caractérisé en ce que** le flanc de gorge de segment (6) opposé au côté de la tête du piston forme une inclinaison d'un angle (β) s'éloignant de la tête du piston.

4. Agencement de segment racleur d'huile et de gorge de segment selon l'une des revendications 1 ou 2, **caractérisé en ce que** le flanc de gorge de segment (5) tourné du côté de la tête du piston forme une inclinaison d'un angle (α) se rapprochant de la tête du piston.

5. Agencement de segment racleur d'huile et de gorge de segment selon l'une des revendications 1 et 2, **caractérisé en ce que** deux segments (1, 1') sont disposés fous, posés l'un sur l'autre dans la gorge de segment (7) offrant une hauteur du fond de gorge (H), la hauteur du fond de gorge étant choisie pour que l'angle (β) prenne une valeur conforme à l'agencement selon la revendication 1.

6. Agencement de segment racleur d'huile et de gorge de segment selon la revendication 5, **caractérisé en ce que** les deux lignes des sommets (3, 3') sont disposées du côté du flanc de gorge de segment (6) opposé au côté de la tête du piston.

7. Agencement de segment racleur d'huile et de gorge de segment selon la revendication 3, **caractérisé en ce que** l'angle α prend une valeur de 93 à 98 degrés d'angle et l'angle β une valeur de 85 à 87 degrés d'angle.

8. Agencement de segment racleur d'huile et de gorge de segment, pour les pistons de moteurs à combustion interne, avec un segment (1) doté de flancs parallèles, dont la surface d'appui (h) possède une forme asymétrique convexe avec une ligne des sommets (3) qui s'étend sur la périphérie du segment, le segment (1) étant disposé dans une gorge de segment (7) du piston comprenant un flanc de gorge de segment (6) opposé à la tête du piston et un flanc de gorge de segment (5) tourné du côté de la tête du piston,
**caractérisé en ce que**
les flancs de gorge de segment (5, 6), en formant chaque fois un angle α ou β par rapport à l'axe du piston (10), sont inclinés dans la direction radiale vers l'extérieur jusqu'au diamètre extérieur du piston, si bien que le flanc de gorge de segment (6) opposé au côté de la tête du piston s'éloigne de la tête du piston et que le flanc de gorge de segment (5) tourné du côté de la tête du piston s'en rapproche ;
la surface d'appui (h) du segment (1) correspond à un contour final proche de l'usure dans l'état du moteur rôdé ; et
dans l'état du segment racleur d'huile (1) monté dans le piston, la ligne des sommets (3) de la surface d'appui (h) est disposée vers le flanc de gorge de segment (6) opposé à la tête du piston.

9. Agencement de segment racleur d'huile et de gorge de segment selon la revendication 7, **caractérisé en ce que** la surface d'appui (h) du segment (1), vue en coupe transversale :
- suit un polynôme du 2^{e} ordre dans une première partie (I) de la forme asymétrique, avec h(x) = ax + bx², où
x = coordonnées de la surface d'appui dans un système de coordonnées cartésiennes en mm ;
a, b sont des coefficients, a définissant le rapport entre le jeu axial du flanc des segments et la largeur des segments et b définissant la valeur de la courbure de la surface d'appui ;
- forme un sommet (II) porteur prenant la forme d'une arête, avec h(x=0) ; et
- suit dans une troisième partie (III) de la forme asymétrique la fonction h(x) = cx², où c est un multiple de b.
